# EUROPÄISCHE PATENTSCHRIFT

(11) **EP 2 073 185 B1**
(45) Veröffentlichungstag und Bekanntmachung des Hinweises auf die Patenterteilung: **09.01.2013**
(21) Anmeldenummer: 08105619.4
(22) Anmeldetag: 21.10.2008
(51) Int. Cl.: G08G 1/16, B60Q 1/52

(54) **Verfahren zum Anzeigen von Warnhinweisen in einem Kraftfahrzeug und korrespondierende Anzeigeanordnung**
Method of displaying warnings in a motor vehicle and the corresponding display arrangement
Procédé destiné à l'affichage de consignes d'alerte dans un véhicule automobile et dispositif d'affichage correspondant

(30) Priorität: 20.12.2007 DE 102007061723
(43) Veröffentlichungstag der Anmeldung: 24.06.2009
(73) Patentinhaber: ROBERT BOSCH GMBH, 70442 Stuttgart (DE)
(72) Erfinder: Sommer, Fanny, 70176 Stuttgart (DE); Engeln, Arnd, 72072 Tuebingen (DE); Schmidt, Raphaela, 70499 Stuttgart (DE); Koenig, Winfried, 76327 Pfinztal (DE); Suessemilch, Irene, 70569 Stuttgart (DE)

(56) Entgegenhaltungen:
- EP-A2- 1 300 717
- DE-A1- 10 249 003
- US-A1- 2002 167 589

## Beschreibung

### TECHNISCHES GEBIET

Die Erfindung betrifft ein Verfahren zum Anzeigen von Warnhinweisen in einem Kraftfahrzeug und mindestens einer Einrichtung zur Detektion von Objekten in der Fahrzeugumgebung aufweisend die Schritte: Detektieren von Objekten in der Fahrzeugumgebung und Aktivieren mindestens einer optischen Anzeigeeinheit innerhalb des Fahrzeuges und eine dazu korrespondierende Anzeigeanordnung.

### STAND DER TECHNIK

Die Informationsvielfalt der zu beachtenden Instrumente und Fahrerassistenzsysteme in einem Fahrzeug steigt mit zunehmender Ausstattung der Fahrzeuge mit den Fahrer unterstützenden Systemen. Um den Fahrer jedoch nicht vom aktuellen Verkehrsgeschehen abzulenken, ist es üblich, Warn- und Hinweisanzeigen im Armaturenbrett des Fahrzeuges hinter dunklen Scheiben zu verbergen, damit die Aufmerksamkeit des Fahrer ausschließlich den gerade aktuellen Warn- und Hinweisanzeigen gewidmet ist. Anzeigeinstrumente mit kontinuierlicher Hinweisfunktion, wie beispielsweise das Tachometer, sind dabei im Blickfeld des Fahrers angeordnet, um das herum andere, im nicht aktivierten Zustand abgedunkelte oder getarnte Anzeigeelemente platziert sind.

Um dem Fahrer dennoch kontinuierliche Informationen zur Verfügung zu stellen, ohne dass der Fahrer den Blick vom Straßenverkehr der Umgebung abzuwenden braucht, wurde bereits vorgeschlagen, Warn- und Hinweisfunktionen in die Frontscheibe einzublenden, wobei der Fokus der eingeblendeten Bilder weit in der Ferne liegt, damit der Fahrer beim Blick auf die Straße nicht ständig den Fokus des eigenen Auges variieren muss, um entweder die Hinweise in der Scheibe zu lesen oder um den Verkehr zu beachten.

Eine solche Anzeigeeinheit zur Richtungsdarstellung von Gefahren- oder Kollisionspotentialen, die von einem Fahrerassistenzsystem erfasst wurden, wird in der DE 198 39 198 A1 offenbart. Dort wird vorgeschlagen, in die Frontscheibe Richtungspfeile zu projizieren, um dem Fahrer erkenntlich zu machen, in welcher Richtung ein Fahrerassistenzsystem Gefahrenpotentiale detektiert hat, damit der Fahrer dorthin seine Aufmerksamkeit richtet.

Diese Art der Projektion von Informationen in das Gesichtsfeld des Fahrers hat aber den Nachteil, dass nicht alle Informationen für den Fahrer in jeder Verkehrssituation wichtig sind, zu erfahren. Das oben genannte Anzeigesystem zur Projektion in die Frontscheibe drängt sich dem Fahrer auf und lenkt daher während des größten Teils der Fahrt ab, statt aktiv und durch den Fahrer gewünscht, zu unterstützen.

In der DE 102 49 003 A1 ist eine Einrichtung zur Repräsentation eines variierenden Gefahrenpotentials für den ein technisches Gerät oder eine Maschine bedienenden Operator beschrieben. Die Einrichtung ist derart ausgelegt, dass mittels ihr Messgrößen von physikalischen Parametern, welche ein Gefahrenpotential bezüglich einer Umgebung des damit ausgestatteten Fahrzeugs ergeben, erfassbar sind und unter Berücksichtigung der Messgrößen ein Alert-Signal zur Lenkung der Aufmerksamkeit des Operators in Richtung des Gefahrenpotentials aktivierbar ist.

Wünschenswerte wäre eine Anzeige, die den Fahrer nur nach Bedarf über wichtige Ereignisse, Warnungen oder Hinweise informieren würde.

### DARSTELLUNG DER ERFINDUNG

Die Erfindung stellt eine optische Anzeigeanordnung gemäß Anspruch 1 und ein Verfahren zum Anzeigen von Warnhinweisen in einem Kraftfahrzeug gemäß Anspruch 4 zur Verfügung. Weitere vorteilhafte Ausgestaltungen der Erfindung sind in den Unteransprüchen angegeben.

In Ausgestaltung der Erfindung umfasst die Detektion von Objekten nicht durch die Präsenz des Objektes selbst, sondern auch den Abstand des Objektes vom Fahrzeug. Der Abstand des Objektes kann dabei dargestellt werden durch verschiedene Helligkeiten, durch Farbsymbole oder durch eine Balkenanzeige, die durch unterschiedliche Anzahl von aktivierten Anzeigeelementen, einen geringeren oder größeren Abstand anzeigt.

In weiterer Ausgestaltung der Erfindung umfasst die Detektion nicht nur die Präsenz und oder den Abstand, sondern auch noch die relative Geschwindigkeit des Objektes in der Fahrzeugumgebung. Sofern nicht nur die Präsenz von Objekten, sondern auch noch die relativen Bewegungsdaten der Objekte mit erfasst werden, so beinhaltet das erfindungsgemäße Verfahren nicht nur die Detektion und anschließende Anzeige, sondern auch noch die Berechnung der Kollisionsgefahr zwischen Detektion und Aktivierung der Anzeige.

Sofern eine Einheit zur Berechnung einer möglichen Kollisionsgefahr aus den Daten über Präsenz, relativer Geschwindigkeit und relativer Bewegungsrichtung eine Kollisionsgefahr ermittelt, so wird ein Warnhinweis auf den Anzeigen dargestellt, wobei unterschiedliche Anzeigenzustände unterschiedliche Wahrscheinlichkeiten einer drohenden Kollisionsgefahr repräsentieren. Hierzu wird die aus aktuellen Daten berechnete Zeit bis zur Kollision als Maß der Wahrscheinlichkeit einer Kollisionsgefahr herangezogen.

In weiterer Ausgestaltung der Erfindung ist vorgesehen, dass die Anzeigenelemente dann ausgeschaltet werden, wenn kein Objekt detektiert wird, um den Fahrer nicht durch Lichtreflexe innerhalb des Fahrzeuges in seiner Aufmerksamkeit zu irritieren.

### KURZE BESCHREIBUNG DER ZEICHNUNGEN

Die Erfindung wird anhand der beiliegenden Figuren näher erläutert.

Es zeigt
- Figur 1: eine Skizze eines Fahrers in einem Kraftfahrzeug mit einer eingezeichneten Anzeigeeinheit auf der A-Säule,
- Figur 2: eine Innenansicht eines Kraftfahrzeuges mit Anzeigeeinheiten auf der C-Säule und im Fahrzeughimmel,
- Figur 3: der Blick aus einem Fahrzeug in einer typischen Straßenverkehrssituation mit kreuzendem Fußgänger,
- Figur 4: Beispiele unterschiedlicher Anzeigenzustände,
- Figur 5: eine typische Ausparksituation mit eingezeichneten Anzeigezuständen an verschiedenen Positionen innerhalb des ausparkenden Fahrzeuges,
- Figur 6: ein Ablaufdiagramm des erfindungsgemäßen Verfahrens.

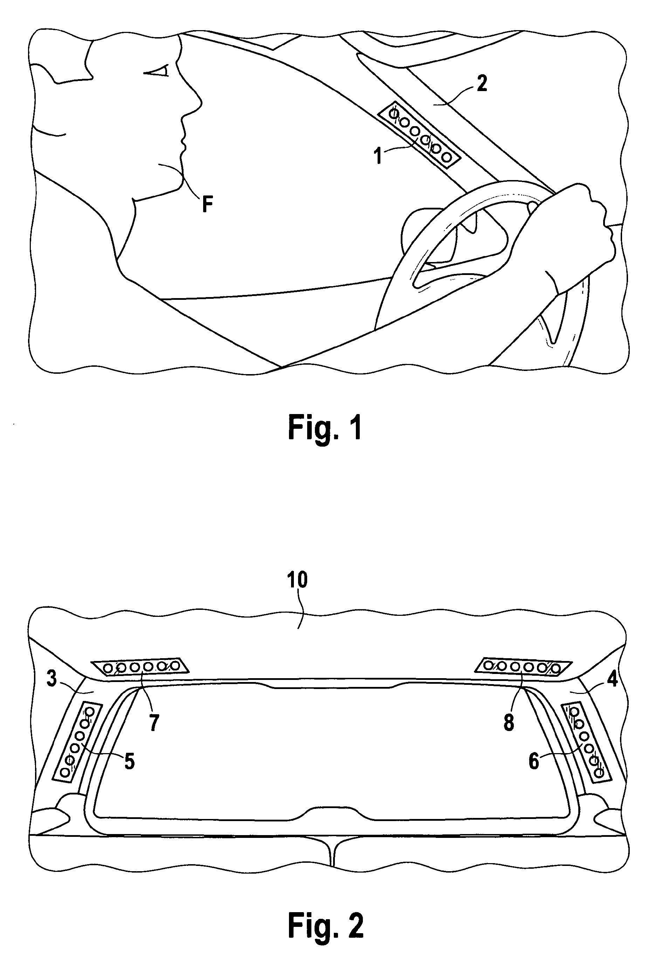

In Figur 1 ist eine Innenansicht eines Fahrzeuges aus der Perspektive eines Beifahrers dargestellt. Eine Anzeigeeinheit 1 ist auf der linken A-Säule 2 des Fahrzeuges angeordnet und liegt damit im direkten Blickfeld des Fahrers F. Zu Anzeigeeinheit 1 identische Anzeigeeinheiten sind auf den hier aufgrund der Perspektive nicht sichtbaren verbleibenden Säulen des Fahrzeuges angeordnet und bieten so dem Fahrer F ein räumliches Bild von Anzeigeelementen, die Hinweis- und/oder Warnsignale darstellen. Dabei ist in Ausgestaltung der Erfindung vorgesehen, dass die Anzeigeelemente ausgeschaltet sind, wenn kein Objekt detektiert wird, oder wenn die Anzeigenfunktion aufgrund erhöhter Eigengeschwindigkeit unterdrückt wird. Dabei ist die Unterdrückung nur dann notwendig, wenn keine Berechnung einer Kollisionsgefahr vorgenommen wird.

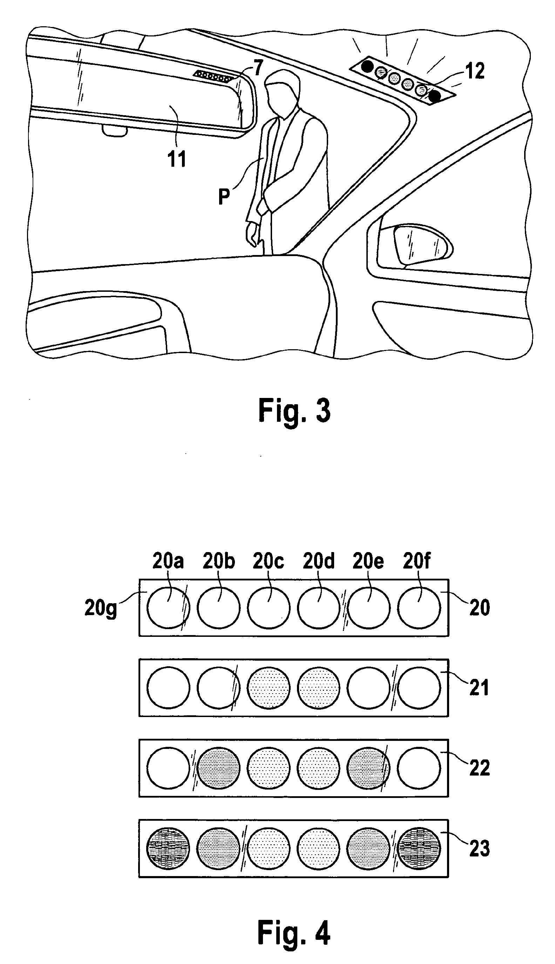

In Figur 2 ist eine perspektivische Innenansicht in ein Fahrzeugheck dargestellt. An den C-Säulen 3 und 4 sind zur Anzeigeeinheit 1 aus Figur 1 identische Anzeigeeinheiten 5 und 6 angeordnet. Alternativ oder kumulativ sind Anzeigeeinheiten 7 und 8 vorgesehen, die im Fahrzeughimmel 10 über den C-Säulen 3 und 4 angeordnet sind. Anzeigeeinheiten 7 und 8 sind aufgrund ihrer Positionierung für den Fahrer F besser sichtbar, wenn sich Personen im Fond des Fahrzeuges befinden und so gegebenenfalls die C-Säulen 3 und 4 verdecken. Auch sind die Anzeigeeinheiten 7 und 8 im Fahrzeughimmel besser in einem Rückspiegel 11 (Figur 3) sichtbar. Die rückwärtigen Anzeigeelemente 5, 6, 7 und 8 werden aktiviert, wenn bei einer Einparksituation ein am Fahrzeugheck stehendes Objekt, beispielsweise ein parkendes Fahrzeug, so nahe kommt, dass eine unmittelbare Kollisionsgefahr besteht. Des Weiteren warnen diese Anzeigeelemente 5 und 6 und/oder 7 und 8 vor Fahrzeugen im toten Winkel seitlich hinter dem Fahrzeug, der bauartbedingt in vielen Fahrzeugen aus der Position des Fahrers F schlecht einsehbar ist.

In Figur 3 ist eine typische Straßenverkehrssituation aus der Perspektive eines Fahrers F dargestellt, der links im Fahrzeug sitzend einen von rechts das Fahrzeug kreuzenden Passanten P sieht. Korrespondierend zur Präsenz des Passanten P an der rechten Front des Fahrzeuges ist eine Anzeigeeinheit 12 aktiviert, die einem Anzeigezustand mit Warnhinweis aktiviert ist. Dabei besteht die Anzeigeeinheit 12 aus einer Balkenanzeige mit unterschiedlich gefärbten Leuchtelementen, die im Vollausschlag aktiviert ist und somit den Fahrer F vor einer möglichen Kollisionsgefahr mit dem Passanten P warnt. Die erfindungsgemäße Anzeige ist aber nicht nur dafür geeignet, für dem Fahrer F offensichtlich sichtbare Objekte im Straßenverkehr anzuzeigen, sondern auch dafür geeignet, Kollisionsgefahr mit Objekten anzuzeigen, die für den Fahrer F nicht gut sichtbar sind, beispielsweise Poller als Straßenbegrenzungen, hohe Bordsteinkanten oder sonstige, aus Fahrersicht schlecht sichtbare Objekte im Straßenverkehr.

In Figur 4 sind verschiedene Anzeigezustände einer Anzeigeeinheit 1, 5, 6, 7 und 8 dargestellt. In nicht aktiviertem Zustand 21 sind alle Leuchtelemente 20a, 20b, 20c. 20d, 20e und 20f ausgeschaltet. Nicht nur zur Zierde, sondern auch, um den Fahrer F nicht zu irritieren, sind die Leuchtelemente 20a, 20b, 20c. 20d, 20e und 20f hinter einer Abdeckung 20g angeordnet, welche die Farbe der A-Säule 2 und C-Säulen 3 und 4 des Fahrzeuges aufweisen. In einem ersten aktivierten Zustand 21 sind zwei mittlere Leuchtelemente 20c und 20d aktiviert, beispielsweise in gelber Farbe, und signalisieren dem Fahrer F die Detektion eines Objektes und bei Berechnung einer Kollisionsgefahr die Zeit, beispielsweise 10 Sekunden bis zur Kollision bei gleich bleibenden relativen Bewegungsdaten von Fahrzeug und Objekt. In einem zweiten Zustand 22 der Anzeigeeinheit 1, 5, 6, 7, 8 sind zwei weitere Leuchtelemente 20b und 20e aktiviert, beispielsweise in oranger Farbe, und signalisieren dem Fahrer F eine größere Nähe des Fahrzeuges zu einem Objekt in der Richtung der Anzeigeeinheit und/oder die Zeit bis zu einer möglichen Kollision bei gleich bleibenden Bewegungsdaten von Fahrzeug und Objekt von ca. beispielsweise 3,5 Sekunden. Bei Vollausschlag 23 sind noch zwei weitere Leuchtelemente 20a und 20f aktiviert, beispielsweise mit roter Farbe, und signalisieren ein unmittelbar am Fahrzeug befindliches Objekt und/oder eine Kollisionsgefahr in weniger als beispielsweise 2,5 Sekunden bei gleich bleibenden Bewegungsdaten von Fahrzeug und Objekt. Die Anzahl und Farbwahl, sowie die Symmetrie der Anordnung der Leuchtelemente ist variierbar. Des Weiteren kann zur Verstärkung der Wahrnehmung durch den Fahrer F der Vollausschlag der Anzeigeeinheit 1, 5, 6, 7 8 noch verschiedene Blinkmodi aufweisen.

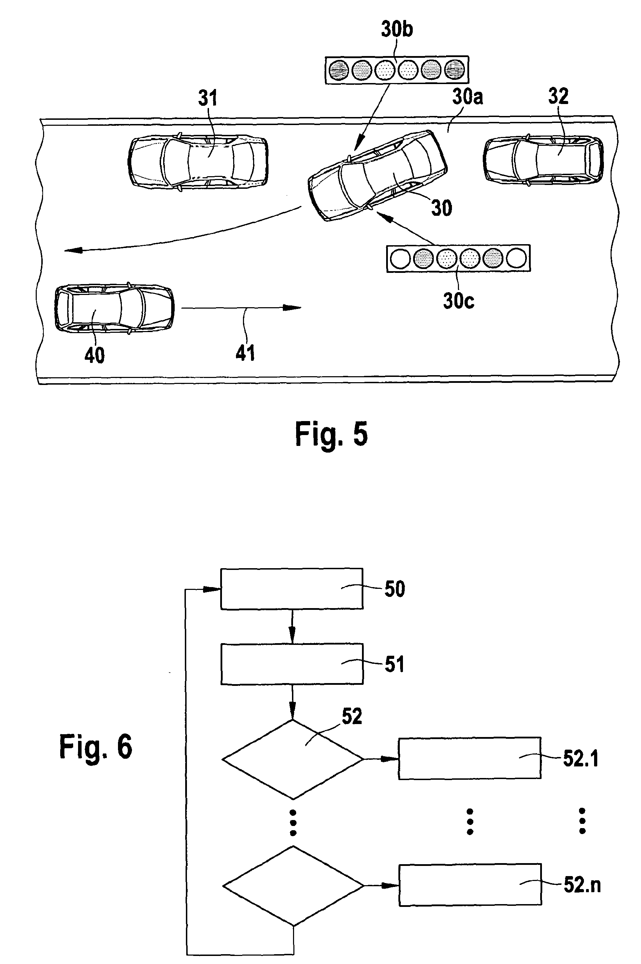

In Figur 5 ist eine typische Ausparksituation eines Fahrzeuges 30 dargestellt, das aus einer Lücke 30a zwischen zwei Fahrzeugen 31 und 32 ausschert. Ein auf der gegenüberliegenden Spur 41 entgegenkommendes Fahrzeug 40 engt den für das ausparkende Fahrzeug 30 zur Verfügung stehenden Rangierraum ein. Korrespondierend zu der eingezeichneten Verkehrssituation ist eine Anzeige 30b auf der rechten A-Säule des Fahrzeuges im Vollausschlag aktiviert, weil bei gleich bleibender Bewegungsrichtung des Fahrzeuges 30 eine Kollision mit dem Heck des Fahrzeuges 31 unmittelbar zu erwarten wäre. Die Anzeigeeinheit 30c an der linken A-Säule des Fahrzeuges 30 signalisiert das entgegenkommende Fahrzeug 40, wobei ein mittlerer Ausschlag aktiviert ist, der eine Kollision in mehr als 2,5 Sekunden anzeigt, vorausgesetzt die Bewegungsdaten der detektierten Objekte, Fahrzeug 31 und Fahrzeug 40 und des Fahrzeuges 30 selbst ändern sich nicht.

In Figur 6 ist ein Ablaufdiagramm des erfindungsgemäßen Verfahrens dargestellt. Beginnend bei einem ersten Schritt 50, in dem ein Objekt 31, 32, 40 durch eine Detektionseinheit im Fahrzeug detektiert wird, folgt diesem Schritt 50 ein Schritt 51 zur Aktivierung mindestens einer Anzeigeeinheit 1, 5, 6, 7, 8, die innerhalb des Fahrzeuges in verschiedenen Richtungen aus Perspektive eines Fahrers F angenordet sind. Die Auswahl der Anzeigeeinheit 1, 5, 6, 7, 8 wird in Schritt 52 vorgenommen, der in kleine Unterschritte 52.1 bis 52.n unterteilt ist, wobei n eine kleine ganze Zahl ist. Je nachdem, ob 2, 4, 6 oder 8 Anzeigeeinheiten 1, 5, 6, 7, 8 im Fahrzeug angeordnet sind, benötigt das System entsprechend viele Unterschritte oder einen konzertierten Schritt 52, in welchem die Auswahl der Anzeigeeinheit 1, 5, 6, 7, 8 ausgewählt wird.

## Patentansprüche

1. Optische Anzeigeanordnung in einem Kraftfahrzeug,
wobei die optische Anzeigeanordnung mindestens zwei, bevorzugt vier Anzeigeeinheiten (1, 5, 6, 7, 8) aufweist, die aus der Perspektive des Fahrzeuglenkers in verschiedenen Richtungen angeordnet sind und welche zur Darstellung unterschiedlicher Kollisionspotentiale mit Objekten (31, 40) in der Fahrzeugumgebung mehrere Anzeigezustände (20, 21, 22, 23) aufweisen,
**dadurch gekennzeichnet, dass**
die Anzeigeeinheiten (1; 5, 6, 7, 8) in der Verkleidung der A, B und/oder C-Säulen (2, 3, 4) des Fahrzeuges, im Fahrzeughimmel (10) über der A, B und/oder C-Säule (2, 3, 4) des Fahrzeuges oder im Fahrzeughimmel (10) über der Windschutzscheibe, über der Heckscheibe und/oder über den Seitenscheiben des Fahrzeuges integriert oder darauf angeordnet sind.

2. Optische Anzeigeanordnung nach Anspruch 1, wobei die Anzeigeeinheiten (1, 5, 6, 7, 8) Balkenanzeigen sind.

3. Optische Anzeigeanordnung nach einem der Ansprüche 1 oder 2, wobei die verschiedenen Anzeigezustände (20, 21, 22, 23) unterschiedliche Farben und/oder Farbkombinationen und/oder verschiedene Blinkmodi aufweisen.

4. Verfahren zum Anzeigen von Warnhinweisen in einem Kraftfahrzeug (30) mit einer optischen Anzeigeanordnung nach einem der Ansprüche 1 bis 3 und mindestens einer Einrichtung zur Detektion von Objekten (31, 32, 40) in der Fahrzeugumgebung aufweisend die Schritte:
Detektieren (50) von Objekten (31, 32, 40) in der Fahrzeugumgebung; und
Aktivieren (52.1, 52.n) mindestens einer optischen Anzeigeeinheit (1, 5, 6, 7, 8), die aus Fahrerperspektive etwa in Richtung des detektierten Objektes (31, 32, 40) angeordnet ist, von mindestens zwei im Kraftfahrzeug verteilten Anzeigeeinheiten (1, 5, 6, 7, 8), wenn ein Objekt (31, 32, 40) in Fahrzeugumgebung erfasst wird.

5. Verfahren nach Anspruch 4, wobei die Detektion (50) auch den Abstand des Objektes (31, 32, 40) erfasst.

6. Verfahren nach einem der Ansprüche 4 oder 5, wobei die Detektion (50) auch die relative Geschwindigkeit des Objektes (31, 32, 40) erfasst.

7. Verfahren nach einem der Ansprüche 4 bis 6, wobei die Detektion (50) auch die relative Bewegungsrichtung des Objektes (31, 32, 40) erfasst.

8. Verfahren nach Anspruch 5 bis 7, wobei ein zusätzlicher Schritt zwischen der Detektion (50) des Objektes (31, 32, 40) und Aktivierung (51) der mindestens einen optischen Anzeigeeinheit (1, 5, 6, 7, 8) eingefügt ist, in welchem die Zeit bis zur Kollision berechnet wird und in Abhängigkeit von der berechneten Zeit verschiedene Anzeigezustände (20, 21, 22, 23) der Anzeige aktiviert werden.

9. Verfahren nach einem der Ansprüche 4 bis 8, wobei die mindestens eine optische Anzeigeeinheit (1, 5, 6, 7, 8) ausgeschaltet wird, wenn kein Objekt detektiert wird.

## Claims

1. Visual display arrangement in a motor vehicle,
wherein the visual display arrangement has at least two, preferably four, display units (1, 5, 6, 7, 8) which, from the perspective of the driver of the vehicle, are arranged in various directions and which have a plurality of display states (20, 21, 22, 23) for displaying different collision possibilities with objects (31, 40) in the surroundings of the vehicle,
**characterized in that**
the display units (1, 5, 6, 7, 8) are integrated into the trim of the A, B and/or C pillars (2, 3, 4) of the vehicle, in the inner roof lining (10) of the vehicle above the A, B and/or C pillars (2, 3, 4) of the vehicle or in the inner roof lining (10) of the vehicle above the front windscreen, above the rear windscreen and/or above the side windows of the vehicle or arranged thereon.

2. Visual display arrangement according to Claim 1, wherein the display units (1, 5, 6, 7, 8) are bar displays.

3. Visual display arrangement according to one of Claims 1 or 2, wherein the various display states (20, 21, 22, 23) have different colours and/or colour combinations and/or different flashing modes.

4. Method for displaying warning instructions in a motor vehicle (30) having a visual display arrangement according to one of Claims 1 to 3, and having at least one device for detecting objects (31, 32, 40) in the surroundings of the vehicle, having the steps:
detection (50) of objects (31, 32, 40) in the surroundings of the vehicle; and
activation (52.1, 52.n) of at least one visual display unit (1, 5, 6, 7, 8) which, from the driver's perspective, is arranged approximately in the direction of the detected object (31, 32, 40), of at least two display units (1, 5, 6, 7, 8) which are distributed in the motor vehicle, if an object (31, 32, 40) is sensed in the surroundings of the vehicle.

5. Method according to Claim 4, wherein the detection means (50) also senses the state of the object (31, 32, 40).

6. Method according to one of Claims 4 or 5, wherein the detection means (50) also senses the relative speed of the object (31, 32, 40).

7. Method according to one of Claims 4 to 6, wherein the detection means (50) also senses the relative direction of movement of the object (31, 32, 40).

8. Method according to Claims 5 to 7, wherein an additional step is inserted between the detection (50) of the object (31, 32, 40) and the activation (51) of the at least one visual display unit (1, 5, 6, 7, 8), in which step the time up to the collision is calculated and various display states (20, 21, 22, 23) of the display are activated as a function of the calculated time.

9. Method according to one of Claims 4 and 8, wherein the at least one visual display unit (1, 5, 6, 7, 8) is switched off if no object is detected.

## Revendications

1. Dispositif d'affichage optique dans un véhicule automobile,
dans lequel le dispositif d'affichage optique comprend au moins deux, et de préférence quatre unités d'affichage (1, 5, 6, 7, 8) qui sont agencées, du point de vue du conducteur, dans des directions différentes et qui présentent une pluralité d'états d'affichage (20, 21, 22, 23) pour représenter différents risques de collision avec des objets (31, 40) dans l'environnement du véhicule,
**caractérisé en ce que**
les unités d'affichage (1, 5, 6, 7, 8) sont intégrées dans le revêtement des colonnes A, B et/ou C (2, 3, 4) du véhicule, dans le toit (10) du véhicule au-dessus des colonnes A, B et/ou C (2, 3, 4) du véhicule ou dans le toit (10) du véhicule au-dessus du pare-brise, au-dessus de la lunette arrière et/ou au-dessus des fenêtres latérales du véhicule ou sur ceux-ci.

2. Dispositif d'affichage optique selon la revendication 1, dans lequel les unités d'affichage (1, 5, 6, 7, 8) sont des diagrammes à barres.

3. Dispositif d'affichage optique selon l'une quelconque des revendications 1 ou 2, dans lequel les divers états d'affichage (20, 21, 22, 23) présentent des couleurs et/ou combinaisons de couleurs différentes et/ou des modes de clignotement différents.

4. Procédé destiné à afficher des avertissements dans un véhicule automobile (30), comportant un dispositif d'affichage optique selon l'une quelconque des revendications 1 à 3 et au moins un dispositif destiné à détecter des objets (31, 32, 40) dans l'environnement du véhicule, comprenant les étapes consistant à :
détecter (50) des objets (31, 32, 40) dans l'environnement du véhicule ; et
activer (52.1, 52.n) au moins une unité d'affichage optique (1, 5, 6, 7, 8) qui est agencée, du point de vue du conducteur, dans la direction approximative de l'objet détecté (31, 32, 40), et au moins deux unités d'affichage (1, 5, 6, 7, 8) réparties dans le véhicule automobile lorsqu'un objet (31, 32, 40) est détecté dans l'environnement du véhicule.

5. Procédé selon la revendication 4, dans lequel la détection (50) détecte également la distance de l'objet (31, 32, 40).

6. Procédé selon l'une quelconque des revendications 4 ou 5, dans lequel la détection (50) détecte la vitesse relative de l'objet (31, 32, 40).

7. Procédé selon l'une quelconque des revendications 4 à 6, dans lequel la détection (50) détecte la direction relative de mouvement de l'objet (31, 32, 40).

8. Procédé selon les revendications 5 à 7, dans lequel une étape supplémentaire est introduite entre la détection (50) de l'objet (31, 32, 40) et l'activation (51) de l'au moins une unité d'affichage optique (1, 5, 6, 7, 8), lors de laquelle le temps avant la collision est calculé et des états d'affichage différents (20, 21, 22, 23) de l'afficheur sont activés en fonction du temps calculé.

9. Procédé selon l'une quelconque des revendications 4 à 8, dans lequel l'au moins une unité d'affichage optique (1, 5, 6, 7, 8) est désactivée si aucun objet n'est détecté.
